# EUROPEAN PATENT SPECIFICATION

(11) **EP 1 164 836 B1**
(45) Date of publication and mention of the grant of the patent: **22.09.2004**
(21) Application number: 00909359.2
(22) Date of filing: 14.03.2000
(51) Int. Cl.: A01K 15/02, C08L 5/00

(54) **ARTICLES TO BE CHEWED BY ANIMALS**
KAUBARE GEGENSTÄNDE FÜR TIERE
ARTICLES A MACHER POUR ANIMAUX

(30) Priority: 15.03.1999 IT TO990199
(43) Date of publication of application: 02.01.2002
(73) Proprietor: NOVAMONT S.p.A., 28100 Novara (IT)
(72) Inventor: BASTIOLI, Catia, I-28100 Novara (IT); LOMBI, Roberto, I-28100 Novara (IT); NICOLINI, Matteo, I-28012 Cressa (IT)
(74) Representative: Rambelli, Paolo (IT)
(86) International application number: PCT/EP2000/002227
(87) International publication number: WO 2000/054578

(56) References cited:
- EP-A- 0 247 606
- EP-A- 0 638 589
- WO-A-99/30691
- JONGBOOM ET AL.: "Inulin as a thermoplastic matrix material for encapsulation" PROCEEDINGS BOOK OF THE 26TH INTERNATIONAL SYMPOSIUM ON CONTROLLED RELEASE OF BIOACTIVE MATERIALS,June 1999 (1999-06), pages 263-264, XP000913601 boston

## Description

The present invention relates to articles to be chewed by animals, typically household pets such as dogs and cats, the articles having particular properties, especially aroma, flavour, resistance to chewing and mechanical properties, which can be adapted to render the articles attractive to the animals. These noteworthy properties can be achieved by virtue of the use of a novel material for the production of the articles.

Animals which chew such as, for example, dogs desire solid articles to satisfy their chewing instinct. Bones, however, are often unsatisfactory because they have the characteristic of breaking into sharp pieces which may be harmful to the animals.

Articles to be chewed by animals perform various useful functions for household pets, for example, exercising the chewing muscles, massaging the gums and cleaning the teeth.

In the past, a great variety of materials has been used for articles to be chewed by animals. For example, rawhide, fabrics or cords have been used but all of these materials suffer from the disadvantage of being subject to breakage due to continual chewing.

Firmer materials such as rubber or plastics have been used but these often have undesirable flavours. Fragrances or aromas have been applied to the surface of the chewable object to increase its attractiveness, but these fragrances or aromas dissolve quickly owing to exposure to the atmosphere or to chewing.

Articles for chewing made of nylon and treated with water-based aromas have achieved a certain amount of commercial success. However, nylon tends to be very hard and relatively rigid, showing a tendency to break up when chewed vigorously. Young animals tend to find nylon articles very attractive but as they start to become adult, they tend to lose interest in articles of these types. This loss of interest has been linked with the hardness of nylon objects.

Polyurethane elastomers have been proposed in order to provide products which are more chewable, but these polymers have a problem connected with the incorporation of oil-based aromas or fragrances since these leave the surfaces of the objects so that the perfume or aroma is retained only for a limited period (United States patent No. 4,513,014).

Patent application EP-A-0 247 606 describes articles for chewing comprising polymer material such as polyethylene and polypropylene and materials containing proteins such as, for example, soya flour and soya protein concentrates.

The high temperatures (200-400°C) to which the polymer/protein mixtures are subjected in order to roast or cook the material containing the protein in order to achieve a brown colour similar to that of meat and to increase the meaty aroma tend to damage the protein, producing components harmful to the animals' health.

WO91/16825 describes chewable articles which can be digested and the consistency or hardness of which can be modified by the owner of the dog so as to adapt it to the needs or preferences of a particular dog. These articles are made of proteinaceous ingredients (casein and gelatine).

The consistency or hardness of the chewable article is adapted by exposure to microwaves so as to achieve the consistencies preferred by a large variety of dogs of both large physique and small build and even by elderly dogs with already decayed molars. However, this task has to be carried out by the owner of the dog who is not always in a position to perform it.

United States patent No. 5,419,383 describes chewable articles made of starch and biodegradable synthetic polymers for household pets such as dogs and cats. These articles are described as being easily digestible by the animal and not producing sharp fragments when broken up.

It has now unexpectedly been found that it is possible to produce chewable articles for animals such as dogs and cats which do not have the disadvantages of the prior art and, in particular, which do not present problems in the incorporation of aromas or flavours, and the mechanical properties, such as consistency, of which can easily be adjusted by an appropriate selection of the composition of the material which forms the chewable article so that it can easily be rendered attractive to the animal, and which also have other noteworthy properties as specified below.

The chewable articles according to the invention are made of inulin and comprise inulin and/or oligofructans as essential components.

Inulin is a polydispersed fructan which is a mixture of oligomers and polymers of fructose containing glucosyl and fructosyl units and having a degree of polymerization (DP) of from 2 to 60 (with reference to inulin extracted from chicory). Approximately half of the dry weight of inulin is composed of molecules with DPs of less than 20.

Inulin is an odourless white powder soluble in hot water and is very widespread in plants, having the function of a carbohydrate storage material.

Many of the plants containing inulin (chicory roots as well as artichoke tubers contain about 70% dry weight of inulin) have been part of the human diet from time immemorial.

Nowadays, inulin is used in pure or crude form as an ingredient in many foods and, in particular, in food for diabetics or in low-calorie food formulations, since inulin is a carbohydrate with a low calorie content.

With regard to the beneficial effects of inulin on the human organism, investigations on the effects on the intestinal flora show that Bifidobacteria increase significantly and that, at the same time, potentially pathogenic microorganisms (for example, Clostridia and coliform bacteria) are significantly reduced.

The effects mentioned, or similar effects, can also be expected for the animals which chew the articles according to the invention.

Oligofructans are a mixture of β (2→1) fructans formed by glucosyl or fructosyl units. The DP is generally between 2 and 10. Oligofructans can be produced by partial enzymatic hydrolysis of inulin or of starch, or from other sources.

It has now surprisingly been found, and this constitutes another aspect of the invention, that inulin can be converted into a thermoplastically processable material by extrusion in the presence of water and/or of a plasticizer having hydroxyl groups such as glycerol and sorbitol or similar hydroxylated polyols which act at temperatures within the range of 80-200°C. The material thus produced can be processed by known techniques.

It has also been found that mixtures of inulin and/or oligofructans with a thermoplastic polymer, when extruded in the presence of water and/or of a plasticizer in conditions such as to render the inulin and the polymeric component compatible from a rheological point of view, produce thermoplastically processable materials having improved mechanical properties in comparison with those of inulin. In particular, their resilience characteristics are improved.

By suitable selection of the thermoplastic polymer component and of its quantity in the mixture, it is possible to adapt the hardness characteristics of the material, thus rendering it more attractive to a large variety of animals.

By exposing the chewable articles to microwaves, it is possible to produce low-density expanded articles the pleasing consistency characteristics of which can be adapted to satisfy a large variety of dogs.

The thermoplastic polymers which can be mixed with inulin are preferably biodegradable. They are selected from the group comprising starch in its natural, chemically modified or physically modified forms, aliphatic polyesters of hydroxy-acids or of corresponding lactones or lactides or of aromatic aliphatic polyesters, polyamides, polyester polyamide copolymers, polyureas, ethylene vinyl alcohol or vinyl ester copolymers, polyvinyl alcohol, plasticized polyvinyl alcohol or similar polymers.

Non-biodegradable polymers such as polyethylene and polypropylene may also be used.

The quantity of inulin and/or oligofructans in the mixture with thermoplastic polymers may vary within wide limits. The range of between 10 and 20% by weight is preferred.

Additives comprising food supplements such as vitamins, proteins, mineral salts, flavourings and aromas or extracts thereof, therapeutic substances such as fluorine or compounds containing fluorine suitable for dental hygiene, or any substance which can increase the enjoyment of the chewable article may be incorporated.

In particular, aromas or flavourings may be incorporated by mixing the additives during the extrusion of the inulin or of the inulin-polymers mixture.

Chewable articles are produced from thermoplastically processable inulin or mixtures of inulin and/or oligofructans with thermoplastic polymers by extrusion, injection moulding or other similar known techniques.

By way of non-limiting example of the present invention, bones of various shapes were prepared from thermoplastically processable inulin and from mixtures of inulin and a biodegradable polymer such as ethylene vinyl alcohol copolymers and caprolactone containing from 10 to 20% by weight of inulin. Suitable quantities of aromas and flavourings were also incorporated.

The bones were very attractive to a large variety of dogs and remained pleasing throughout their useful life.

## Claims

1. Chewable articles for animals, typically for household pets such as dogs and cats, the articles being made from inulin or comprising mixtures of inulin and/or oligofructans with thermoplastic polymers.

2. Chewable articles according to Claim 1, produced from thermoplastically processable inulin or from mixtures of inulin and/or oligofructans with thermoplastic polymers.

3. Chewable articles according to Claim 1 or Claim 2, in which the thermoplastic polymer is selected from the biodegradable polymers.

4. Chewable articles according to Claim 3, in which the biodegradable polymer is selected from the group comprising starch in its natural, chemically modified, or physically modified forms, aliphatic polyesters, ethylene vinyl alcohol or vinyl acetate copolymers, polyvinyl alcohol, aromatic aliphatic copolymers, polyamides, polyester polyamide copolymers.

5. Chewable articles according to any one of Claims 1 to 4, in which the quantity of inulin and/or oligofructans present in the mixtures with thermoplastic polymers is between 10 and 20% by weight.

6. Chewable articles according to any one of Claims 1 to 5, in which the inulin and the mixtures of inulin and/or oligofructans with thermoplastic polymers are rendered thermoplastically processable by extrusion at temperatures of between 80 and 200°C in the presence of water and/or a plasticizer containing hydroxyl groups.

7. Chewable articles according to Claim 6, in which the plasticizer is sorbitol or glycerol.

8. Chewable articles according to Claims 1 to 7, in the form of bones for dogs.

9. A thermoplastically processable material comprising mixtures of inulin and/or oligofructans with thermoplastic polymers.

10. Use of the thermoplastically processable material of Claim 9, for producing chewable articles for animals.

## Patentansprüche

1. Kaubare Gegenstände für Tiere, typischerweise für Haustiere wie z.B. Hunde und Katzen, wobei die Gegenstände aus Inulin bestehen oder Mischungen von Inulin und/oder Oligofruktanen mit thermoplastischen Polymeren umfassen.

2. Kaubare Gegenstände gemäß Anspruch 1, welche aus thermoplastisch verarbeitbarem Inulin oder aus Mischungen von Inulin und/oder Oligofruktanen mit thermoplastischen Polymeren hergestellt sind.

3. Kaubare Gegenstände gemäß Anspruch 1 oder Anspruch 2, wobei das thermoplastische Polymer aus den biologisch abbaubaren Polymeren ausgewählt ist.

4. Kaubare Gegenstände gemäß Anspruch 3, wobei das biologisch abbaubare Polymer ausgewählt ist aus der Gruppe, umfassend Stärke in seiner natürlichen, chemisch modifizierten oder physikalisch modifizierten Form, aliphatische Polyester, Ethylenvinylalkohol oder Vinylacetat-Copolymere, Polyvinylalkohol, aromatische aliphatische Copolymere, Polyamide, Polyesterpolyamid-Copolymere.

5. Kaubare Gegenstände gemäß einem der Ansprüche 1 bis 4, wobei die Menge an Inulin und/oder Oligofruktanen, die in den Mischungen mit thermoplastischen Polymeren vorhanden ist, zwischen 10 und 20 Gew.% beträgt.

6. Kaubare Gegenstände gemäß einem der Ansprüche 1 bis 5, wobei das Inulin und die Mischungen von Inulin und/oder Oligofruktanen mit thermoplastischen Polymeren durch Extrudieren bei Temperaturen zwischen 80 und 200°C in Gegenwart von Wasser und/oder eines Hydroxylgruppen enthaltenden Weichmachers thermoplastisch verarbeitbar gemacht werden.

7. Kaubare Gegenstände gemäß Anspruch 6, wobei der Weichmacher Sorbit oder Glycerin ist.

8. Kaubare Gegenstände gemäß den Ansprüche 1 bis 7 in Form von Knochen für Hunde.

9. Thermoplastisch verarbeitbares Material, umfassend Mischungen von Inulin und/oder Oligofruktanen mit thermoplastischen Polymeren.

10. Verwendung des thermoplastisch verarbeitbaren Materials nach Anspruch 9 zur Herstellung von kaubaren Gegenständen für Tiere.

## Revendications

1. Articles à mâcher pour animaux, typiquement pour des animaux domestiques tels que des chiens et chats, les articles étant faits d'inuline ou comprenant un mélange d'inuline et/ou d'oligofructanes avec des polymères thermoplastiques.

2. Articles à mâcher selon la revendication 1, produits à partir d'inuline susceptible d'être obtenue de façon thermoplastique ou à partir de mélanges d'inuline et/ou d'oligofructanes avec des polymères thermoplastiques.

3. Articles à mâcher selon la revendication 1 ou 2, dans lesquels le polymère thermoplastique est choisi parmi les polymères biodégradables.

4. Articles à mâcher selon la revendication 3, dans lesquels le polymère biodégradable est choisi dans le groupe constitué de l'amidon et de ses formes naturelles, modifié chimiquement ou modifié physiquement, les polyesters aliphatiques, l'alcool éthylène vinyle ou les copolymères de vinyle acétate, l'alcool polyvinylique, les copolymères aromatiques aliphatiques, les polyamides, et les copolymères polyester polyamide.

5. Articles à mâcher selon l'une quelconque des revendications 1 à 4, dans lesquels la quantité d'inuline et/ou d'oligofructanes présente dans les mélanges avec les polymères thermoplastiques est comprise entre 10 et 20 % en poids.

6. Articles à mâcher selon l'une quelconque de revendications 1 à 5, dans lesquels l'inuline et les mélanges d'inuline et/ou d'oligofructanes avec les polymères thermoplastiques sont susceptibles d'être produits thermoplastiquement par extrusion à des températures comprises entre 80 et 200 °C en présence d'eau et/ou d'un plastifiant contenant des groupes hydroxyle.

7. Articles à mâcher selon la revendication 6, dans lesquels le plastifiant est le sorbitol ou le glycérol.

8. Articles à mâcher selon l'une quelconque des revendications 1 à 7, sous la forme d'os pour chiens.

9. Matériau susceptible d'être produit thermoplastiquement, comprenant des mélanges d'inuline et/ou d'oligofructanes avec des polymères thermoplastiques.

10. Utilisation d'un matériau susceptible d'être produit thermoplastiquement selon la revendication 9, pour la production d'articles à mâcher pour animaux.
